# EUROPEAN PATENT APPLICATION

(11) **EP 4 578 967 A1**
(43) Date of publication of application: **02.07.2025**
(21) Application number: 24779306.0
(22) Date of filing: 08.03.2024
(51) Int. Cl.: C22B 26/12, B01J 20/06, C01D 15/04, C02F 1/28, C22B 3/24, C22B 3/44

(54) **METHOD FOR PRODUCING LITHIUM-CONTAINING SOLUTION**

(30) Priority: 31.03.2023 JP 2023058800
(71) Applicant: SUMITOMO METAL MINING CO., LTD., Tokyo 105-8716 (JP)
(72) Inventor: KASEYAMA, Takuya, Niihama-shi, Ehime 792-0002 (JP); TAKANO, Masatoshi, Niihama-shi, Ehime 792-0002 (JP); MURAKAMI, Akihiro, Niihama-shi, Ehime 792-0002 (JP); MAEDA, Kyohei, Niihama-shi, Ehime 792-0002 (JP)
(74) Representative: Jones, Nicholas Andrew
(86) International application number: PCT/JP2024/009099
(87) International publication number: WO 2024/203175

(57) **Abstract**

Provided is a method for producing a lithium-containing solution that allows suppressing production cost for lithium production by increasing a lithium content rate of a solution after an eluting step, and suppressing amount of a solution in a process after the eluting step. The method for producing a lithium-containing solution includes an adsorption step, an eluting step of bringing post-adsorption lithium manganese oxide into contact with an acid-containing solution to obtain an eluted solution, and a manganese oxidation step performed in this order. The eluting step is constituted including a first eluting step having a high H⁺ concentration of the acid-containing solution, and a second eluting step having a H⁺ concentration of the acid-containing solution lower than that of the first eluting step. The second eluting step is performed after the first eluting step. With this configuration, elusion is performed efficiently in the first eluting step, and a hydrogen ion concentration of the acid-containing solution need not be increased in the second eluting step. Therefore, the amount of acid to be added to the acid-containing solution can be suppressed, and the amount of the eluted solution used in the manganese oxidation step can be suppressed.

## Description

### BACKGROUND

### 1. Technical Field

The present invention relates to a method for producing a lithium-containing solution. More particularly, the present invention relates to a method for producing a lithium-containing solution that allows suppressing production cost for lithium production by increasing a content rate of lithium in a solution after an eluting step, and suppressing amount of a solution used in a process after the eluting step.

### 2. Related Art

λ-MnO₂ having a spinel type structure (such as HMn₂O₄, H_{1.33}Mn_{1.67}O₄, or H_{1.6}Mn_{1.6}O₄) obtained by bringing lithium manganese oxide (such as LiMn₂O₄, Li_{1.33}Mn_{1.67}O₄, or Li_{1.6}Mn_{1.6}O₄) into contact with mineral acid, such as hydrochloric acid, is known to selectively adsorb lithium. When using this λ-MnO₂ to collect lithium, since the λ-MnO₂ does not adsorb impurities, it provides advantages such as substantially reducing a usage amount of a neutralizer in collecting lithium. Therefore, this method is expected to be used commercially. A method for producing a lithium-containing solution using this λ-MnO₂ is disclosed in Patent Document 1.

In the method for producing a lithium-containing solution in Patent Document 1, acid is added to a whole amount of an eluted solution obtained in an eluting step as an acid-containing solution used in the eluting step in order to adjust a hydrogen ion concentration of the acid-containing solution, and thereby an amount of an eluted solution used in a process after the eluting step is suppressed.

### Citation List

### Patent Literature

Patent Document 1: WO 2022/210847

### SUMMARY

Nevertheless, since acid is required to be added to the acid-containing solution in order to allow the hydrogen ion concentration to be a predetermined value, there is a problem that, when a large amount of acid is added, the effect of suppressing amount of the solution used in the process after the eluting step becomes limited.

In view of the above circumstances, an object of the present invention is to provide a method for producing a lithium-containing solution that allows suppressing production cost for lithium production by increasing a lithium content rate in a solution after an eluting step, and suppressing amount of a solution used in a process after the eluting step.

### SOLUTIONS TO THE PROBLEMS

A method for producing a lithium-containing solution of a first invention includes an adsorption step of bringing a lithium adsorbent obtained from lithium manganese oxide into contact with a low concentration lithium-containing solution to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. The eluting step is constituted including a first eluting step and a second eluting step having a hydrogen ion concentration of the acid-containing solution lower than a hydrogen ion concentration of the acid-containing solution in the first eluting step. The second eluting step is performed after the first eluting step.

In a method for producing a lithium-containing solution of a second invention, which is in the first invention, the hydrogen ion concentration of the acid-containing solution in the first eluting step is 1.0 mol/L or more and 4.0 mol/L or less, and the hydrogen ion concentration of the acid-containing solution in the second eluting step is 0.1 mol/L or more and 0.5 mol/L or less.

In a method for producing a lithium-containing solution of a third invention, which is in the first invention or the second invention, in the eluting step, the eluted solution is separated into a high concentration lithium-eluted solution containing lithium at a high concentration and a low concentration lithium-eluted solution having a lithium concentration lower than a lithium concentration of the high concentration lithium-eluted solution. The acid-containing solution used in the eluting step includes a solution prepared by adding acid to the low concentration lithium-eluted solution. The eluted solution used in the manganese oxidation step includes the high concentration lithium-eluted solution.

In a method for producing a lithium-containing solution of a fourth invention, which is in the third invention, the high concentration lithium-eluted solution is, among the eluted solution obtained through the eluting step, the eluted solution extracted by a predetermined volume based on a start of obtaining the eluted solution.

In a method for producing a lithium-containing solution of a fifth invention, which is in the third invention, the high concentration lithium-eluted solution is the eluted solution obtained between a predetermined start time and end time after a start of the eluting step.

In a method for producing a lithium-containing solution of a sixth invention, which is in any of the first invention to the fifth invention, a water washing step of washing a post-elusion lithium adsorbent obtained after the eluting step is provided after the eluting step, and a post-water washing liquid obtained in the water washing step is added to the acid-containing solution.

### EFFECTS OF THE INVENTION

According to the first invention, since the eluting step is constituted including the first eluting step and the second eluting step having a hydrogen ion concentration of the acid-containing solution lower than a hydrogen ion concentration of the acid-containing solution in the first eluting step, and the second eluting step is performed after the first eluting step, elusion is performed efficiently in the first eluting step, and the hydrogen ion concentration of the acid-containing solution need not be increased in the second eluting step. Therefore, the amount of acid to be added to the acid-containing solution can be suppressed, and the amount of the eluted solution used in the manganese oxidation step can be suppressed. Thus, production cost for lithium production can be suppressed.

According to the second invention, since the hydrogen ion concentration of the acid-containing solution in the first eluting step and the hydrogen ion concentration of the acid-containing solution in the second eluting step have predetermined values, dissolution of manganese from the lithium adsorbent can be suppressed, and the efficiency of the elution can be enhanced.

According to the third invention, since the high concentration lithium-eluted solution is included in the eluted solution used in the manganese oxidation step, a lithium content rate of the eluted solution used in the manganese oxidation step can be made high. In addition, since only the low concentration lithium-eluted solution is added to the acid-containing solution, the hydrogen ion concentration in the acid-containing solution can be increased by adding just a small amount of acid, which consequently allows further suppressing amount of the acid-containing solution and allows suppressing amount of the eluted solution used in the manganese oxidation step.

According to the fourth invention, since the high concentration lithium-eluted solution is the eluted solution extracted by a predetermined volume based on the start of obtaining the eluted solution, a lithium content rate of the high concentration lithium-eluted solution can be made high.

According to the fifth invention, since the high concentration lithium-eluted solution is the eluted solution obtained between a predetermined start time and end time after the start of the eluting step, the high concentration lithium-eluted solution can be easily obtained.

According to the sixth invention, by the post-water washing liquid obtained in the water washing step being added to the acid-containing solution, lithium that used to be unavoidably disposed in the water washing step can be collected.

### BRIEF DESCRIPTION OF DRAWINGS

Fig. 1 is a flowchart of a method for producing a lithium-containing solution according to a first embodiment of the present invention;
Fig. 2 is a flowchart of a method for producing a lithium-containing solution according to a second embodiment of the present invention;
Fig. 3 is a flowchart of a method for producing a lithium-containing solution according to a third embodiment of the present invention;
Fig. 4 is a flowchart of a method for producing a lithium-containing solution according to a fourth embodiment of the present invention;
Fig. 5 is a graph showing lithium concentration for each predetermined volume based on the start of obtaining an eluted solution in the method for producing a lithium-containing solution in Fig. 2; and
Fig. 6 is a graph showing lithium concentration for each predetermined volume based on the start of obtaining a post-water washing liquid in the method for producing a lithium-containing solution in Fig. 3.

### DETAILED DESCRIPTION

Next, the embodiments of the present invention will be described based on the drawings. However, the following embodiments illustrate examples of methods for producing a lithium-containing solution for realization of the technical idea of the present invention, and thus the present invention does not intend to limit the method for producing a lithium-containing solution to the following method.

A method for producing a lithium-containing solution according to the present invention includes an adsorption step of bringing a lithium adsorbent obtained from lithium manganese oxide into contact with a low concentration lithium-containing solution to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. The eluting step is constituted including a first eluting step and a second eluting step having a hydrogen ion concentration of the acid-containing solution lower than a hydrogen ion concentration of the acid-containing solution in the first eluting step. The second eluting step is performed after the first eluting step.

Since the eluting step is constituted including the first eluting step and the second eluting step having a hydrogen ion concentration of the acid-containing solution lower than a hydrogen ion concentration of the acid-containing solution in the first eluting step, and the second eluting step is performed after the first eluting step, elusion is performed efficiently in the first eluting step, and the hydrogen ion concentration of the acid-containing solution need not be increased in the second eluting step. Therefore, the amount of acid to be added to the acid-containing solution can be suppressed, and the amount of the eluted solution used in the manganese oxidation step can be suppressed. Thus, production cost for lithium production can be suppressed.

Further, it is preferable for the hydrogen ion concentration of the acid-containing solution in the first eluting step to be 1.0 mol/L or more and 4.0 mol/L or less, and the hydrogen ion concentration of the acid-containing solution in the second eluting step to be 0.1 mol/L or more and 0.5 mol/L or less. With this aspect, dissolution of manganese from the lithium adsorbent can be suppressed, and the efficiency of the elution can be enhanced.

Further, in the eluting step, the eluted solution is preferably separated into a high concentration lithium-eluted solution containing lithium at a high concentration and a low concentration lithium-eluted solution having a lithium concentration lower than the lithium concentration of the high concentration lithium-eluted solution. The acid-containing solution used in the eluting step preferably includes a solution prepared by adding acid to the low concentration lithium-eluted solution. The eluted solution used in the manganese oxidation step preferably includes the high concentration lithium-eluted solution. With this aspect, a lithium content rate of the eluted solution used in the manganese oxidation step can be made high. In addition, since only the low concentration lithium-eluted solution is added to the acid-containing solution, the hydrogen ion concentration in the acid-containing solution can be increased by adding just a small amount of acid, which consequently allows further suppressing amount of the acid-containing solution and suppressing amount of the eluted solution used in the manganese oxidation step.

Further, it is preferable that the high concentration lithium-eluted solution is, among the eluted solution obtained through the eluting step, the eluted solution extracted by a predetermined volume based on the start of obtaining the eluted solution. With this aspect, a lithium content rate of the high concentration lithium-eluted solution can be made high.

Further, it is preferable that the high concentration lithium-eluted solution is the eluted solution obtained between a predetermined start time and end time after the start of the eluting step. With this aspect, the high concentration lithium-eluted solution can be easily obtained.

Further, it is preferable that a water washing step of washing a post-elusion lithium adsorbent obtained after the eluting step is provided after the eluting step, and a post-water washing liquid obtained in the water washing step is added to the acid-containing solution. With this aspect, lithium that used to be unavoidably disposed in the water washing step can be collected.

### (First Embodiment)

### (Preceding Stage of Adsorption Step)

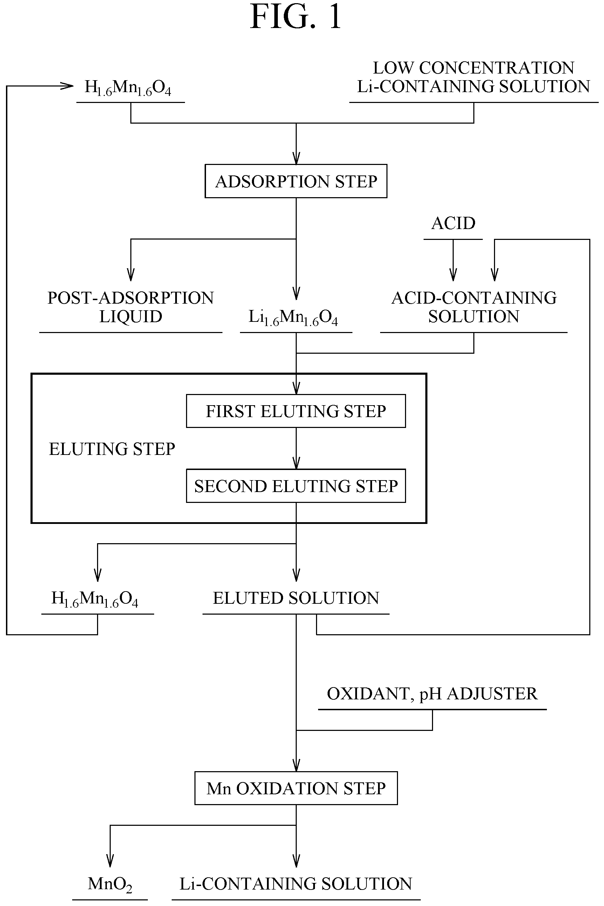

In the adsorption step, a low concentration lithium-containing solution is brought into contact with the lithium adsorbent to obtain the post-adsorption lithium manganese oxide, and the method of obtaining the lithium adsorbent used in this adsorption step will be described. Fig. 1 illustrates a flowchart of the method for producing a lithium-containing solution according to a first embodiment of the present invention, and the description of the "preceding stage of the adsorption step" is the stage in which H_{1.6}Mn_{1.6}O₄ is obtained, which is the topmost step in Fig. 1.

The lithium manganese oxide becomes the lithium adsorbent by being subjected to acid treatment as indicated in Formula 1. In Formula 1, the lithium manganese oxide is represented as Li_{1.6}Mn_{1.6}O₄, but the lithium manganese oxide is not limited thereto. For example, Li_{1.33}Mn_{1.67}O₄ can also be used. In other words, when the lithium manganese oxide is Li_{1.6}Mn_{1.6}O₄, the lithium adsorbent is H_{1.6}Mn_{1.6}O₄, but when the lithium manganese oxide is, for example, Li_{1.33}Mn_{1.67}O₄, the lithium adsorbent is H_{1.33}Mn_{1.67}O₄. The acid used for the acid treatment is HCl, but it is not limited thereto. For example, sulfuric acid and nitric acid can also be used.

A shape of the lithium manganese oxide becomes a form that takes the adsorption of lithium into account in the adsorption step. For example, the shape of the lithium manganese oxide can be various forms, such as powder form, particle form produced by granulating the powder, or column form sprayed on fibers of a column. When the acid treatment is performed, for example, H_{1.6}Mn_{1.6}O₄ is obtained as the lithium adsorbent. The shape of the lithium adsorbent is the same as the shape of the lithium manganese oxide before the acid treatment is performed.

[Formula 1] Li_{1.6}Mn_{1.6}O₄ + 1.6HCl → H_{1.6}Mn_{1.6}O₄ + 1.6LiCl

### (Adsorption Step)

Fig. 1 illustrates a flow chart of the method for producing a lithium-containing solution according to the first embodiment of the present invention. In the adsorption step, the low concentration lithium-containing solution is brought into contact with the lithium adsorbent to obtain the post-adsorption lithium manganese oxide through the ion-exchange reaction between H and Li as indicated in Formula 2. In the present description, the lithium manganese oxide obtained in the adsorption step is sometimes referred to as a post-adsorption lithium manganese oxide.

[Formula 2] H_{1.6}Mn_{1.6}O₄ + 1.6LiCl → Li_{1.6}Mn_{1.6}O₄ + 1.6HCl

The low concentration lithium-containing solution is, for example, seawater or salt lake brine. For example, the seawater contains an average of 0.17 ppm lithium. However, in addition to lithium, other elements such as sodium, magnesium, or calcium are dissolved in these low concentration lithium-containing solutions. According to the method for producing a lithium-containing solution of the present invention, it is possible to selectively collect lithium from the low concentration lithium-containing solution in which these elements are dissolved. Note that the low concentration lithium-containing solution means that the lithium amount per unit volume is lower, that is, the lithium concentration is lower, than that of the lithium-containing solution described later.

In the adsorption step, the method of contact between the low concentration lithium-containing solution and the adsorbent differs depending on the shape of the adsorbent. For example, when the adsorbent is in a form of powder, one method is to put a predetermined amount of the adsorbent into the low concentration lithium-containing solution and stir it for a predetermined time. This causes the low concentration lithium-containing solution and the adsorbent to come into contact, and lithium is adsorbed on the adsorbent. When the adsorbent is in a particle form, one method is to seal the adsorbent in a particle form in a container for liquid passage and cause the low concentration lithium-containing solution to pass therethrough. Thus, the low concentration lithium-containing solution and the adsorbent come into contact, and lithium is adsorbed on the adsorbent. When the adsorbent is sprayed on fibers of a column, one method is to cause the low concentration lithium-containing solution to pass through the column. Thus, the low concentration lithium-containing solution comes into contact with the adsorbent, and lithium is adsorbed on the adsorbent. When the low concentration lithium-containing solution passes therethrough, the solution is sometimes caused to pass therethrough repeatedly to ensure the number of times it contacts the adsorbent.

After the adsorption step, the adsorbent becomes the post-adsorption lithium manganese oxide. The low concentration lithium-containing solution becomes a post-adsorption liquid after lithium is adsorbed by the adsorbent. This post-adsorption liquid is discharged into the sea or the lake where the low concentration lithium-containing solution was collected. At that time, the post-adsorption liquid is treated to a state suitable for discharge, such as by neutralization, before being discharged.

### (Eluting Step)

In the eluting step, the post-adsorption lithium manganese oxide is brought into contact with the acid-containing solution to obtain the eluted solution by the reaction indicated in Formula 3. In this case, the post-adsorption lithium manganese oxide is regenerated as the lithium adsorbent by the exchange reaction between cations Li⁺ and H⁺, and this lithium adsorbent is used in the adsorption step again.

[Formula 3] Li_{1.6}Mn_{1.6}O₄ + 1.6HCl → H_{1.6}Mn_{1.6}O₄ + 1.6LiCl

In the present embodiment, the acid-containing solution includes a solution of an acid alone, such as hydrochloric acid, and an eluted solution obtained by once having undergone the eluting step to which the acid is then added. For example, in the present embodiment, the eluting step is divided into a plurality of stages, such as the first eluting step and the second eluting step. The first eluting step is an eluting step having a relatively high hydrogen ion concentration of the acid-containing solution, and the second eluting step is an eluting step having a hydrogen ion concentration of the acid-containing solution lower than a hydrogen ion concentration of the acid-containing solution in the first eluting step. For example, the acid-containing solution at an early stage of the first eluting step can be a solution of acid alone, and the subsequent acid-containing solution can be prepared by adding acid to the eluted solution obtained in the previous stage so as to have a predetermined hydrogen ion concentration. In this case, the eluted solution in the second eluting step is prepared by adding acid to the eluted solution obtained in the previous step. Also, the acid-containing solution in the first eluting step can be a solution of acid alone, and the acid-containing solution in the second eluting step can be prepared by adding acid to the eluted solution obtained in the previous step.

The reaction indicated in Formula 3 proceeds more as the value of pH of the acid-containing solution used in the eluting step decreases. However, since the value of pH of the acid-containing solution starts to increase when the reaction indicated in Formula 3 proceeds to a certain degree, the reaction indicated in Formula 3 stops proceeding. In WO 2022/210847 of Patent Document 1, in order not to reach this state, the eluting step is performed by being divided into a plurality of stages, and in the second stage and later of the plurality of stages, a solution prepared by adding acid to the eluted solution obtained in the previous stage is used as the acid-containing solution. However, since acid is supplied thereto so as to obtain the same pH as that of the acid-containing solution that is supplied first in this case, the suppression of amount of the eluted solution is limited.

Since the eluting step is constituted including the first eluting step and the second eluting step having a hydrogen ion concentration of the acid-containing solution lower than a hydrogen ion concentration of the acid-containing solution in the first eluting step, and the second eluting step is performed after the first eluting step, elusion is performed efficiently in the first eluting step, and the hydrogen ion concentration of the acid-containing solution need not be increased in the second eluting step. Therefore, the amount of acid to be added to the acid-containing solution can be suppressed, and the amount of the eluted solution used in the manganese oxidation step can be suppressed. Thus, production cost for lithium production can be suppressed.

By thus allowing the content rate of lithium in the eluted solution to increase, a facility size in the post-process can be suppressed, and the load of a process for obtaining lithium in a solid state can be reduced. That is, as the content rate of lithium increases, the amount of the lithium-containing solution itself can be reduced, and the facility size in the post-process need not be increased. In addition, when obtaining lithium in a solid state, an amount of time to boil the solution can be shortened, and the pH adjuster in the manganese oxidation step described later, or an amount of the pH adjuster in a neutralizing step provided after the manganese oxidation step can be suppressed. This neutralization step is provided, for example, to remove magnesium. Also, a solution containing a high concentration of lithium can be shipped directly to a customer.

While a case where the eluting step is divided into a plurality of stages has been described, the eluting step is not limited to this mode. For example, a case where acid is continuously added to the eluted solution such that the eluted solution becomes the acid-containing solution is also included.

The hydrogen ion concentrations of the acid-containing solutions to be brought into contact with the post-adsorption lithium manganese oxide in the eluting step, that is, the first eluting step and the second eluting step of the present embodiment are each preferably 0.1 mol/L or more and 4.0 mol/L or less. The hydrogen ion concentrations are each more preferably 0.25 mol/L or more and 2.0 mol/L or less. The hydrogen ion concentrations are each still more preferably 0.5 mol/L or more and 1.0 mol/L or less.

In this eluting step, since the hydrogen ion concentration of the acid-containing solution is 0.1 mol/L or more and 4.0 mol/L or less, it is possible to suppress dissolution of the entire lithium manganese oxide while maintaining the efficiency of the exchange reaction between cations Li⁺ and H⁺ in the eluting step. That is, the lithium adsorbent can be used repeatedly.

When the hydrogen ion concentration of the acid-containing solution is thinner than 0.1 mol/L, the exchange reaction between cations cannot be sufficiently carried out, and the
efficiency of this exchange reaction is decreased. When the acid-containing solution is thicker than 4.0 mol/L, the entire lithium manganese oxide is dissolved in the acid-containing solution, and the post-adsorption lithium manganese oxide cannot be used again as the lithium adsorbent. The acid used in the acid-containing solution is preferably hydrochloric acid, but is not limited thereto. For example, sulfuric acid or acetic acid is used in some cases.

Further, it is preferable for the hydrogen ion concentration of the acid-containing solution in the first eluting step to be 1.0 mol/L or more and 4.0 mol/L or less, and the hydrogen ion concentration of the acid-containing solution in the second eluting step to be 0.1 mol/L or more and 0.5 mol/L or less.

Since the hydrogen ion concentration of the acid-containing solution in the first eluting step and the hydrogen ion concentration of the acid-containing solution in the second eluting step have predetermined values, dissolution of manganese from the lithium adsorbent can be suppressed, and the efficiency of the elution can be enhanced.

The mode of contact between the post-adsorption lithium manganese oxide and the acid-containing solution performed in the eluting step varies depending on the shape of the lithium manganese oxide. For example, when the lithium manganese oxide is in a powder form, one method is to put a powder of the post-adsorption lithium manganese oxide into the acid-containing solution and stir it to cause contact between the post-adsorption lithium manganese oxide and the acid-containing solution. When the lithium manganese oxide is in a particle form or is sprayed on fibers of a column, one method, in which the lithium manganese oxide in a particle form and the column are in a state of being stored in a container for liquid passage, is to cause the acid-containing solution to pass through the container for liquid passage and thereby bring the post-adsorption lithium manganese oxide into contact with the acid-containing solution.

### (Manganese Oxidation Step)

In the manganese oxidation step, the oxidant and the pH adjuster are added to the eluted solution obtained in the eluting step to oxidize divalent manganese to tetravalent manganese, so as to obtain a lithium-containing solution with the suppressed manganese concentration. Since tetravalent manganese has low solubility, it precipitates in solution. This allows the concentration of manganese contained in the eluted solution to be suppressed. Furthermore, the precipitated manganese can be reused as a raw material for the lithium adsorbent.

To oxidize divalent manganese to tetravalent manganese, the oxidant and the pH adjuster are added to the eluted solution. When the oxidant and the pH adjuster are added, the pH is preferably in a range of 3 or more to 7 or less, and the redox potential is preferably adjusted to be 600 mV or more and 1100 mV or less at a silver chloride electrode. In other words, the pH and the redox potential are measured simultaneously, and the oxidant and the pH adjuster are added simultaneously or alternately so that they fall within the above-described ranges. As the oxidant, for example, sodium hypochlorite, sodium chlorite, ozone, and permanganate can be used. However, they are not limited thereto, and there is no problem as long as the redox potential can be prepared. As the pH adjuster, for example, an alkaline-neutralizing agent, such as sodium hydroxide and slaked lime, can be used. However, it is not limited thereto, and there is no problem as long as the pH can be adjusted.

### (Subsequent Stage of Manganese Oxidation Step)

In the lithium-containing solution obtained in the manganese oxidation step, lithium is present in a form of lithium chloride (LiCl) in the present embodiment. Thus, lithium can be obtained in a form of lithium carbonate, for example, by adding alkali to this solution or by superheating and concentrating it.

Further, the post-adsorption lithium manganese oxide becomes the lithium adsorbent by the acid-containing solution, and this lithium adsorbent is used in the adsorption step again.

### (Second Embodiment)

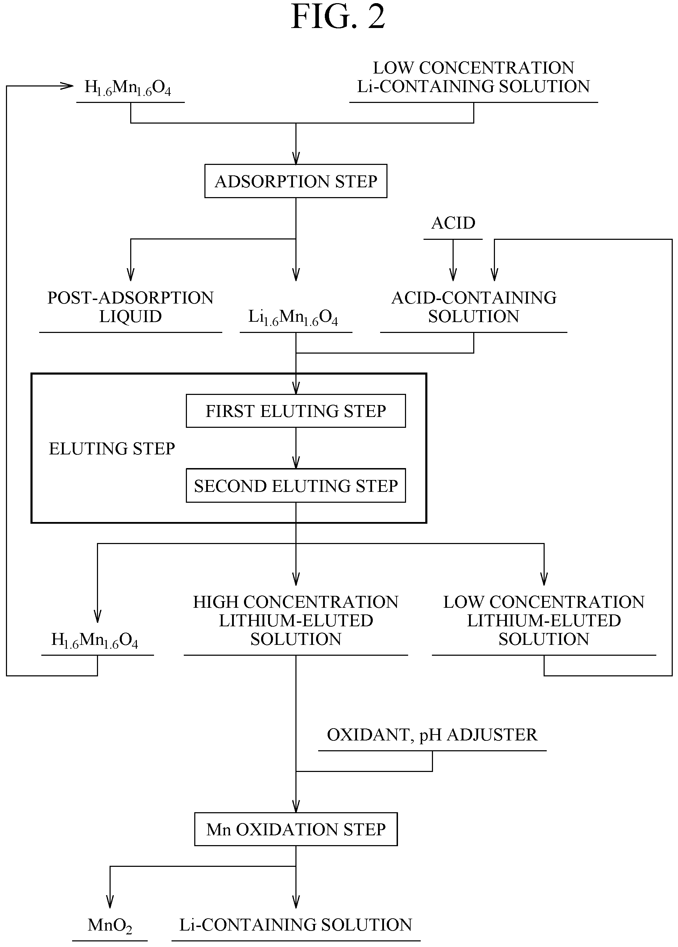

Fig. 2 illustrates a flow chart of a method for producing a lithium-containing solution according to a second embodiment of the present invention. The difference between the method for producing a lithium-containing solution according to the second embodiment and the method for producing a lithium-containing solution according to the first embodiment is as follows. In the eluting step, the eluted solution is separated into a high concentration lithium-eluted solution containing lithium at a high concentration and a low concentration lithium-eluted solution having a lithium concentration lower than the lithium concentration of this high concentration lithium-eluted solution. The acid-containing solution includes a solution prepared by adding acid to the low concentration lithium-eluted solution. The eluted solution used in the manganese oxidation step includes the high concentration lithium-eluted solution. Other points are the same as in the first embodiment. Therefore, the differences mentioned above will be described below.

### (Eluting Step in Second Embodiment)

In the present embodiment, the eluted solution is separated into a high concentration lithium-eluted solution and a low concentration lithium-eluted solution in the eluting step. The high concentration lithium-eluted solution is an eluted solution containing lithium at a high concentration, and the low concentration lithium-eluted solution is an eluted solution having a concentration of lithium lower than the concentration of lithium of the high concentration lithium-eluted solution.

In the present embodiment, the acid-containing solution in the eluting step includes a solution of acid alone, such as hydrochloric acid, and a solution prepared by adding acid to the low concentration lithium-eluted solution.

The high concentration lithium-eluted solution is an eluted solution containing lithium at a high concentration, and therefore used in a process performed after the eluting step. An example of this process performed after the eluting step is the manganese oxidation step.

Since the high concentration lithium-eluted solution is included in the eluted solution used in the manganese oxidation step, a lithium content rate of the eluted solution used in the manganese oxidation step can be made high. In addition, since only the low concentration lithium-eluted solution is added to the acid-containing solution, the hydrogen ion concentration in the acid-containing solution can be increased by adding just a small amount of acid, which consequently allows suppressing amount of the acid-containing solution, and suppressing amount of the eluted solution used in the manganese oxidation step. Thus, production cost for lithium production can be suppressed.

Regarding the separation between the high concentration lithium-eluted solution and the low concentration lithium-eluted solution, when this eluting step is performed by batch processing, for example, an eluted solution extracted by a predetermined volume based on the start of obtaining the eluted solution with the acid-containing solution being added can be the high concentration lithium-eluted solution, and the rest of the eluted solution can be the low concentration lithium-eluted solution. For example, when it is possible to predict approximately how much lithium is to be eluted with respect to a type of the low concentration lithium-containing solution or the lithium adsorbent, an eluted solution of a volume of a predetermined magnification with respect to the volume of the lithium adsorbent can be the high concentration lithium-eluted solution, and the subsequent eluted solution can be the low concentration lithium-eluted solution.

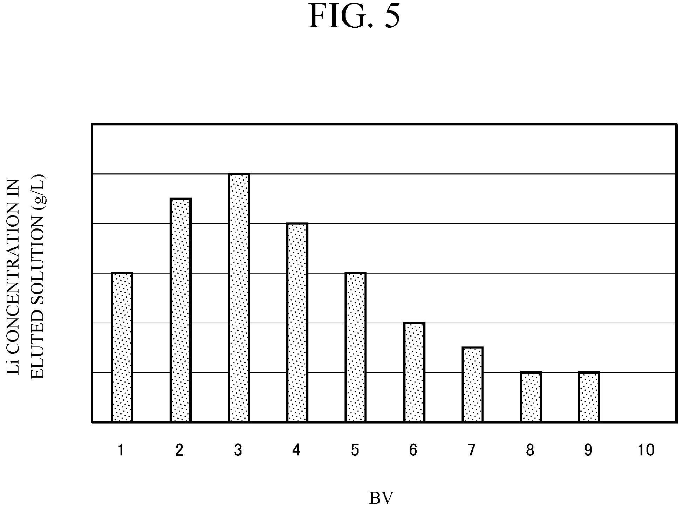

Further, Fig. 5 indicates a graph showing lithium concentration for each predetermined volume based on the start of obtaining the eluted solution in the present embodiment. The horizontal axis is Bed Volume (BV: a unit indicating how many times of a volume of the lithium adsorbent in the column), and the vertical axis indicates the concentration of lithium contained in the eluted solution obtained after the eluting step. For example, as in the case indicated in Fig. 5, it is possible to extract BV2 and BV3 that have exceeded the second horizontal line from the top as the "predetermined volume based on the start of obtaining the eluted solution" to be the high concentration lithium-eluted solution, and allow BV1 and BV4 to BV9 to be the low concentration lithium-eluted solution, thereby separating them.

Since the high concentration lithium-eluted solution is the eluted solution extracted by a predetermined volume based on the start of obtaining the eluted solution, the lithium content rate of the high concentration lithium-eluted solution can be made high.

Note that, while BV2 and BV3 are extracted as the high concentration lithium-eluted solution in the present embodiment, it is not limited thereto. For example, it is also possible to extract a predetermined volume from the start of obtaining the eluted solution, that is, to allow BV1 to BV4 to be the high concentration lithium-eluted solution. In addition, it is also possible to allow only BV3 to be the high concentration lithium-eluted solution.

Furthermore, for example, when this eluting step is performed by batch processing, and a liquid passing rate of the acid-containing solution used in the eluting step is a
predetermined rate, the separation of the high concentration lithium-eluted solution and the low concentration lithium-eluted solution can be performed by allowing the eluted solution obtained between a predetermined start time and end time after the start of the eluting step to be the high concentration lithium-eluted solution, and the eluted solution that is subsequently obtained to be the low concentration lithium-eluted solution. While the liquid passing rate is generally represented as Space Velocity (SV: a liquid passing quantity BV per unit time (one hour)), when this SV is constant, the high concentration lithium-eluted solution can be the eluted solution obtained between a predetermined start time and end time after the start of the eluting step. Note that the start of the eluting step can be predetermined, such as when the acid-containing solution starts to be injected or when the eluted solution starts to be collected.

Since the high concentration lithium-eluted solution is the eluted solution obtained within a predetermined time period after the start of the eluting step, the high concentration lithium-eluted solution can be easily obtained.

### (Third Embodiment)

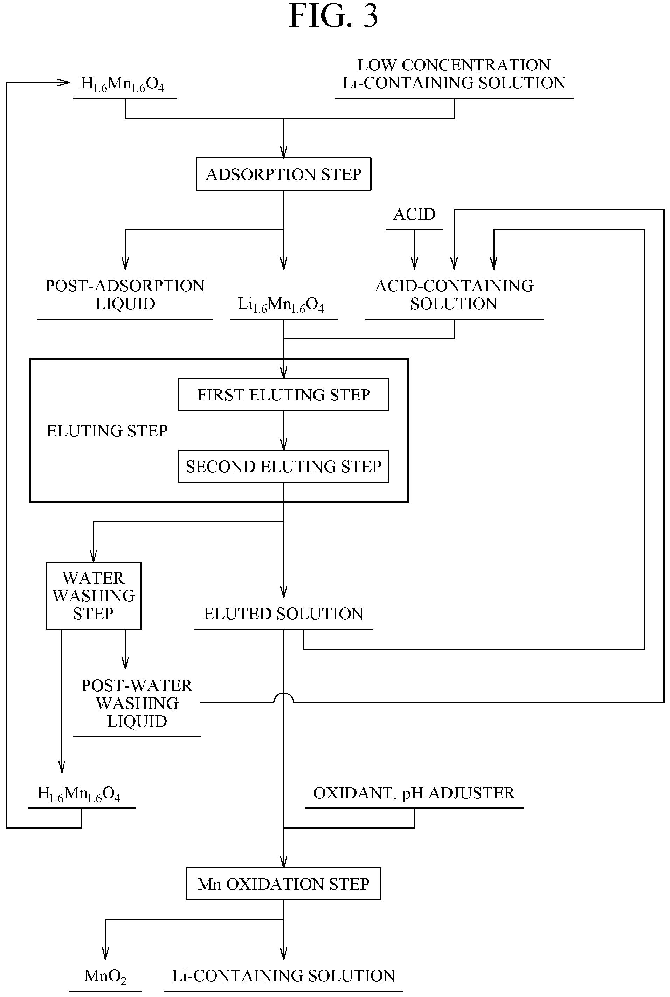

Fig. 3 illustrates a flowchart of a method for producing a lithium-containing solution according to a third embodiment of the present invention. The difference in the method for producing a lithium-containing solution according to the third embodiment from the method for producing a lithium-containing solution according to the first embodiment is that a water washing step of washing a post-elusion lithium adsorbent obtained through the eluting step is provided after the eluting step, and that a post-water washing liquid obtained in that water washing step is added to the acid-containing solution. Other points are the same as in the first embodiment. Therefore, the differences mentioned above will be described below.

### (Water Washing Step)

In the eluting step in the second embodiment, a post-elusion lithium adsorbent is obtained. This post-elusion lithium adsorbent is washed in the water washing step. In the water washing step, pure water is used, or industrial water in consideration of the cost is used, for example. The post-elusion lithium adsorbent that is washed with water in the water washing step is regenerated as the lithium adsorbent, and this lithium adsorbent is used again in the adsorption step.

A post-water washing liquid obtained after washing the post-elusion lithium adsorbent in the water washing step contains lithium in some cases. For example, the post-water washing liquid obtained immediately after the start of washing has a relatively high lithium concentration. In the present embodiment, this post-water washing liquid is added to the acid-containing solution. The post-water washing liquid added to the acid-containing solution may be the entire post-water washing liquid or may be a part thereof. However, since the post-water washing liquid obtained immediately after the start of washing has a high lithium concentration, it is preferable for a predetermined amount of the post-water washing liquid after the start of washing to be added to the acid-containing solution.

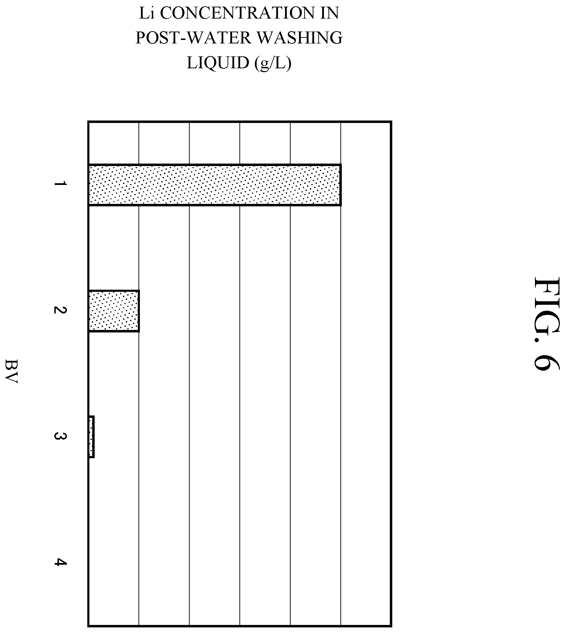

Fig. 6 is a graph showing lithium concentration for each predetermined volume based on the start of obtaining the post-water washing liquid in the present embodiment. The horizontal axis is BV of the post-water washing liquid, and the vertical axis indicates the concentration of lithium contained in the post-water washing liquid obtained after the water washing step. For example, in the present embodiment, it is preferable that a post-water washing liquid of BV1, that is, the post-water washing liquid by an amount of BV1 after the start of obtaining the post-water washing liquid based on the start of obtaining the post-water washing liquid is added to the acid-containing solution.

By the post-water washing liquid obtained in the water washing step being added to the acid-containing solution, lithium that used to be unavoidably disposed in the water washing step can be collected.

### (Fourth Embodiment)

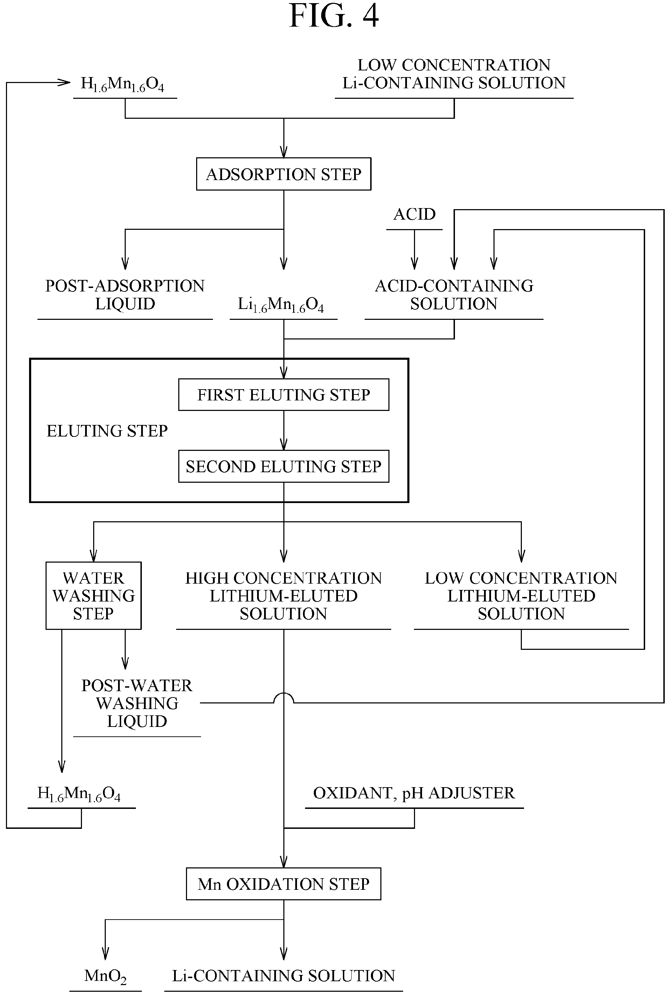

Fig. 4 illustrates a flowchart of a method for producing a lithium-containing solution according to a fourth embodiment of the present invention. The difference in the method for producing a lithium-containing solution according to the fourth embodiment from the method for producing a lithium-containing solution according to the second embodiment is that a water washing step of washing a post-elusion lithium adsorbent obtained through the eluting step is provided after the eluting step, and that a post-water washing liquid obtained in that water washing step is added to the acid-containing solution. Other points are the same as in the second embodiment. Also, a detailed description of the water washing step is included in the description of the third embodiment. Therefore, the detailed description of the water washing step will be omitted.

### Examples

Specific examples of the method for producing a lithium-containing solution according to the present invention will be described below, but the present invention is not limited to these examples.

### <Example 1>

### (Adsorption Step)

In a glass column with a diameter of 20 mm, 10 ml of lithium adsorbent H_{1.6}Mn_{1.6}O₄ in a powder form was retained. A solution in which lithium is dissolved to simulate salt lake brine, which is a low concentration lithium-containing solution, was passed through this column, and the lithium adsorbent became Li_{1.6}Mn_{1.6}O₄, which is a post-adsorption lithium manganese oxide. The low concentration lithium-containing solution had a lithium concentration of 0.7 g/L. In the adsorption step, liquid passage was performed at SV15, and the low concentration lithium-containing solution was passed through by the amount of BV30.

### (Eluting Step)

The post-adsorption lithium manganese oxide in the glass column and the acid-containing solution were brought into contact. As the acid-containing solution in the first eluting step, an acid-containing solution made by 1 mol/L of hydrochloric acid alone was passed through by the amount of BV2. As the acid-containing solution in the next second eluting step, the eluted solution having undergone the first eluting step with hydrochloric acid being added to have a hydrogen ion concentration of 0.5 mol/L was repeatedly used. In that case, the liquid passing quantity was BV10, and the liquid passing rate was SV15. That is, BV3 through BV12 are all in the second eluting step, and the acid-containing solutions thereof all have the hydrogen ion concentration of 0.5 mol/L. The solution that flowed out from the column was separated into a high concentration lithium-eluted solution containing lithium at a high concentration as an early stage of the outflow, and a low concentration lithium-eluted solution having a concentration of lithium lower than the concentration of lithium of this high concentration lithium-eluted solution as a subsequent stage to the above stage. In the present example, the concentration of the high concentration lithium-eluted solution was 6.5 g/L. Since the liquid passage of the eluted solution was performed by the amount of BV12, the liquid amount thereof was 120 ml. The manganese concentration of the eluted solution at this time was 0.02 g/L.

### (Manganese Oxidation Step)

The manganese oxidation step was performed using the eluted solution obtained in the eluting step. In this case, the oxidant and the pH adjuster were used to obtain a lithium-containing solution. The manganese concentration in this case was 0.0 g/L.

### <Comparative Example 1>

In Comparative Example 1, the hydrogen ion concentrations of the acid-containing solutions in the eluting step were all 0.5 mol/L (0.5 mol/L using hydrochloric acid alone at the beginning, and later 0.5 mol/L using an eluted solution obtained by once having undergone the eluting step to which hydrochloric acid was then added) and the eluting step was performed. Other parameters are the same as those in Example 1. The concentration of the high concentration lithium-eluted solution in this Comparative Example 1 was 3.4 g/L. The liquid amount of the eluted solution at this time was 120 ml, which is the same as in Example 1. Also, the manganese concentration of the eluted solution at this time was 0.02 g/L.

### <Comparative Example 2>

In Comparative Example 2, the hydrogen ion concentrations of the acid-containing solutions in the eluting step were all 1.0 mol/L (1.0 mol/L using hydrochloric acid alone at the beginning, and later 1.0 mol/L using an eluted solution obtained by once having undergone the eluting step to which hydrochloric acid was then added) and the eluting step was performed. Other parameters are the same as those in Example 1. The concentration of the high concentration lithium-eluted solution in this Comparative Example 2 was 5.2 g/L. The liquid amount of the eluted solution at this time was 120 ml, which is the same as in Example 1. Also, the manganese concentration of the eluted solution at this time was 0.06 g/L.

### (Summary)

Regarding the high concentration lithium-eluted solution, it has been understood that, while the lithium concentration in Example 1 is 6.5 g/L, which is 6.0 g/L or more, and the lithium concentration is maintained high, the lithium concentration in Comparative Example 1 is 3.4 g/L and the lithium concentration in Comparative Example 2 is 5.2 g/L, which are both less than 6.0 g/L, and the lithium concentration of the high concentration lithium-eluted solution is low. Thus, it has been understood that, since the lithium concentration of the high concentration lithium-eluted solution in Example 1 is high, when the lithium amount that is eventually obtained is constant, the entire amount of the eluted solution can be suppressed. Also, it has been understood that, in Example 1, compared with Comparative Example 2, the manganese concentration is also able to be suppressed to remain at a low level, and deterioration of the lithium adsorbent is able to be suppressed.

The term "based on a start of obtaining" encompasses "based on a physical quantity at a start of obtaining", and the physical quantity includes the concentration, the time, the volume, and the like.

## Claims

1. A method for producing a lithium-containing solution, comprising:
an adsorption step of bringing a lithium adsorbent obtained from lithium manganese oxide into contact with a low concentration lithium-containing solution to obtain post-adsorption lithium manganese oxide;
an eluting step of bringing the post-adsorption lithium manganese oxide into contact with an acid-containing solution to obtain an eluted solution; and
a manganese oxidation step of oxidating manganese by adding an oxidant and a pH adjuster to the eluted solution to obtain a lithium-containing solution with a suppressed manganese concentration, wherein
the adsorption step, the eluting step, and the manganese oxidation step are performed in this order,
the eluting step is constituted including a first eluting step and a second eluting step having a hydrogen ion concentration of the acid-containing solution lower than a hydrogen ion concentration of the acid-containing solution in the first eluting step, and
the second eluting step is performed after the first eluting step.

2. The method for producing a lithium-containing solution according to claim 1, wherein
the hydrogen ion concentration of the acid-containing solution in the first eluting step is 1.0 mol/L or more and 4.0 mol/L or less, and
the hydrogen ion concentration of the acid-containing solution in the second eluting step is 0.1 mol/L or more and 0.5 mol/L or less.

3. The method for producing a lithium-containing solution according to claim 1 or 2, wherein
in the eluting step, the eluted solution is separated into a high concentration lithium-eluted solution containing lithium at a high concentration and a low concentration lithium-eluted solution having a lithium concentration lower than a lithium concentration of the high concentration lithium-eluted solution,
the acid-containing solution used in the eluting step includes a solution prepared by adding acid to the low concentration lithium-eluted solution, and
the eluted solution used in the manganese oxidation step includes the high concentration lithium-eluted solution.

4. The method for producing a lithium-containing solution according to claim 3, wherein
the high concentration lithium-eluted solution is, among the eluted solution obtained through the eluting step, the eluted solution extracted by a predetermined volume based on a start of obtaining the eluted solution.

5. The method for producing a lithium-containing solution according to claim 3, wherein
the high concentration lithium-eluted solution is the eluted solution obtained between a predetermined start time and end time after a start of the eluting step.

6. The method for producing a lithium-containing solution according to any of claim 1 to 5, wherein
a water washing step of washing a post-elusion lithium adsorbent obtained after the eluting step is provided after the eluting step, and
a post-water washing liquid obtained in the water washing step is added to the acid-containing solution.
